# EUROPÄISCHE PATENTSCHRIFT

(11) **EP 1 201 943 B1**
(45) Veröffentlichungstag und Bekanntmachung des Hinweises auf die Patenterteilung: **06.05.2009**
(21) Anmeldenummer: 01811004.9
(22) Anmeldetag: 15.10.2001
(51) Int. Cl.: F16B 37/08

(54) **Schnellmontagemutter**
Quick-mounting nut
Ecrou à assemblage rapide

(30) Priorität: 23.10.2000 DE 10052445
(43) Veröffentlichungstag der Anmeldung: 02.05.2002
(73) Patentinhaber: HILTI Aktiengesellschaft, 9494 Schaan (LI)
(72) Erfinder: Hoffmann, Armin, 86899 Landsberg (DE); Birnbaum, Ulrich, 86916 Kaufering (DE); Unverzagt, Stefan, 86929 Penzing (DE); Herb, Armin, 86974 Apfeldorf (DE)
(74) Vertreter: Wildi, Roland

(56) Entgegenhaltungen:
- EP-A- 0 454 914
- CA-A- 898 794
- FR-A- 1 536 344
- GB-A- 524 399

## Beschreibung

Die Erfindung betrifft eine Schnellmontagemutter, vorzugsweise als Befestigungssystem zur Montage von Gewindestangen, die in Installationsschienen herabhängen.

Eine Mutter weist allgemein ein, in den äusseren Gewindegang eines Bolzens formschlüssig eingreifendes, radial inneres Eingriffsmittel auf, welches als alleinigen Bewegungsfreiheitsgrad der auf dem Bolzen positionierten Mutter eine Schraubbewegung längs des Gewindegangs zulässt. Über Haftreibung des Gewindeganges mit dem Eingriffsmittel der axial verspannten Mutter wird diese fixiert.

Nach der DE19737262A1 weist eine C-förmige Profile montierende Fassadenbefestigungsvorrichtung einen Drahtbügel mit zwei federnden Schenkeln auf, welche kraftschlüssig in langgestreckte hinterschnittene Öffnungen eines axialen Tragelements einschnappt und formschlüssig in diese eingreift. Eine derartige, kraftschlüssig einschnappende Befestigung ist für Gewindegänge mit schrägen Flanken ungeeignet.

Nach der DE347859 greift ein, zur Handmontage als Flügelmutter ausgebildeter, Drahtbügel beidseitig in die Gewindegänge eines Bolzens ein. Nach der EP0084280 greift ein als Drahtmutter ausgebildeter zweischenklig federnder Drahtbügel mit beiden radialen Schenkeln spulenartig in die Gewindegänge eines Bolzens ein. Nach der US3880041 beinhaltet ein als Mutter ausgebildetes federndes Befestigungselement im hohlen Inneren einen koaxial spulenförmig gewickelten Drahtbügel, der in die Gewindegänge eingreift. Diese Muttern ermöglichen keine schraubbewegungsfreie axiale Positionierung.

Nach der DE4307645 greift der Drahtbügel einer Schnellmontagemutter nur teilweise in die Gewindegänge ein, wodurch die Schnellmontagemutter durch axialen Druck axial positioniert werden kann. Nach der DE19831001 ist eine Schnellmontagemutter mit einem koaxial spulenförmig gewickelten Drahtbügel im Inneren eines Muttergehäuses als selbstarretierende Flügelmutter ausgebildet, welche eine schraubbewegungsfreie axiale Positionierung ermöglicht, durch eine Schraubbewegung fixiert und durch ein Lösemoment längs des Drahtes entarretiert werden kann. Der nur kraftschlüssig erfolgende Eingriff in die Gewindegänge ermöglicht keine lastbeständige Fixierung der Schnellmontagemutter.

Um Rohrleitungen in Installationsschienen zu befestigen, werden als Teil eines Befestigungssystems spezielle, den Installationsschienen zugeordnete, Schienenmuttern verwendet, die mit einem metrischen Gewinde versehen sind. Eine Gewindestange dient hierbei als Verbindungselement zwischen der Rohrschelle und der Schienenmutter sowie zur Höhenjustierung. Die als Meterware vorliegenden Gewindestangen werden zur Montage auf die benötigte Länge geschnitten, wodurch sich Schnittgraten ausbilden, die vor Einschrauben in die Schienenmutter über ein Anfasen entfernt werden müssen. Das Anfasen und die Höhenjustierung sind sehr zeitintensiv.

Nach der DE4403974 sind Schnellmontagemuttern bekannt, welche ohne Schraubbewegung axial der Gewindestange positioniert werden können. Dazu sind die als Gewindesektoren ausgeführten, in das Gewinde der Gewindestange formschlüssig eingreifende, Eingriffsmittel der Schnellmontagemutter axial federnd ausschwenkbar. Nach einer Schraubbewegung zur Fixierung der Schnellmontagemutter greifen die eingeschwenkten, an einem Anschlag fixierten Eingriffsmittel formschüssig in das Gewinde der Gewindestange ein.

Des weiteren sind nach der DE4243185 spezielle, innerhalb der Installationsschienen angeordnete, Schienenmuttern mit einer schnappartig vormontierten Druckplatte zur Montage an Installationsschienen bekannt, die mit einer weiteren Mutter ausserhalb Installationsschienen gekontert werden.

Die Aufgabe der Erfindung besteht in einer weiteren Realisierung einer formschlüssig fixierenden Schnellmontagemutter sowie in einem weiteren Aspekt in der Realisierung eines schnell montierbaren Befestigungssystems zur Montage an Installationsschienen.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist eine, axial zu einem Gewindebolzen bewegliche, lösbare Schnellmontagemutter, bestehend aus einem, teilweise in zumindest einen Gewindegang eingreifenden, federnden Drahtbügel innerhalb eines Muttergehäuses mit einer durchgehenden koaxialen Öffnung, in dieser einen sich von der axialen Ruhelage des Drahtbügels radial verjüngenden Innenkonus auf, innerhalb dessen der begrenzt axial bewegliche Drahtbügel zumindest teilweise anlegbar ist. Der Drahtbügel ist zweischenklig mit relativ zueinander federnden Schenkeln ausgeführt, dessen nahezu parallele Schenkel innerhalb der Radialebene jeweils leicht radial kraftschlüssig teilweise in die Gewindegänge des Gewindebolzens eingreifen, wodurch über Schraubbewegungen der Drahtbügel teilweise axial in den Innenkonus verschiebbar ist.

Durch diesen, durch den Innenkonus vermittelten, äusseren Zwang ergibt sich mit dem in den Gewindegang des Gewindebolzens eingreifenden Drahtbügel eine schraubenartig formschlüssige Befestigung der Schnellmontagemutter.

Weiter vorteilhaft ist der Drahtbügel innerhalb eines Muttergehäuses, die eine Handmutter ausbildet, axial begrenzt beweglich gelagert.

Weiter vorteilhaft besteht das Muttergehäuse aus zwei, längs des Drahtbügels relativ zueinander beweglich geführten Schalen, von denen eine Deckschale als Entarretierungsmittel einen radial nach innen gerichteten Keil ausbildet, welcher in einer ersten Position der Schalen zwischen die freien Enden der Schenkel des Drahtbügels, diese entgegen ihrer Vorspannung spreizend, einführbar ist, wodurch die Schnellmontagemutter schraubbewegungsfrei axial positionierbar ist. In der zweiten Position, bewirkt der, durch gerichtete Drehung der Schnellmontagemutter axial versetzte, im koaxialen Innenkonus anliegende Drahtbügel einen Formschluss mit dem Gewindegang, wodurch die Schnellmontagemutter durch Schraubbewegungen sowohl fixierbar als auch lösbar ist. Die Schnellmontagemutter ist zwischen der ersten und der zweiten Position schaltbar ausgebildet, wodurch die Verbindung wieder lösbar ist.

Vorteilhaft sind die relativ zueinander beweglichen Schalen über Einrastmittel miteinander verbunden, welche weiter vorteilhaft eine Führung längs des innerhalb einbettbaren Drahtbügels ausbilden.

Vorteilhaft ist auf der den Innenkonus ausbildenden Seite des Muttergehäuses eine Befestigungshülse koaxial angeformt, über welche die Schnellmontagemutter mit einer Druckplatte oder einer Schienenmutter, die zur Montage an Installationsschienen ausgeführt ist, koaxial drehbar verbindbar ist.

Vorteilhaft weist in einer anderen Ausführungsvariante eine Deckschale 13b eine radial aufweitbare koaxiale Aussenkonushülse mit einer radial äusseren umlaufenden Ringnut für den Mittelteil des Drahtbügels auf, in welcher dieser spannungsfrei axial fixierbar ist. Die Aussenkonushülse ist axial geschlitzt und somit federnd radial aufweitbar, wenn der Gewindebolzen durch diese hindurchgesteckt wird. Zudem weist die Deckschale im radial äusseren Bereich als Betätigungsmittel zur Arretierung ein Schaltelement auf, über dessen bei Betätigung erfolgenden axialen Kontakt der, innerhalb des Muttergehäuses versetzt axial einseitig unterstützte sowie in der Ringnut axial fixierte, Drahtbügel 4 aus der Ringnut heraus begrenzt axial versetzbar ist und vermittelt durch seine radiale Eigenspannung selbstständig axial an der Aussenkonushülse entlang abgleitet und in die Gewindegänge eingreift.

Vorteilhaft weist die Deckschale mit der radial aufweitbaren koaxialen Aussenkonushülse als Betätigungsmittel zur Arretierung zumindest einen, vorteilhaft zwei gegenständig angeordnete, radial auskragende axial federnde Kragarme auf, welche im radial äusseren Bereich jeweils einen zum Drahtbügel orientierten axialen Lagerbolzen für den Drahtbügel aufweisen, welche ihrerseits weiter vorteilhaft spreizend federnde Rastnasen ausbilden, über welche die radial äusseren Bereiche des Drahtbügels innerhalb der Schenkel axial fixierend einrastbar sind, wodurch über eine Betätigung eines, vorteilhaft gleichzeitige beider, Kragarme der somit axial verspannte Drahtbügel aus der Ringnut heraus begrenzt axial versetzbar ist und über den Aussenkonus in den Gewindegang abgleitet.

Vorteilhaft bildet die Deckschale die Griffflächen der Flügelmutter senkrecht zu den längs des Drahtbügels orientierten Kragarmen aus.

In einer vorteilhaften alternativen Ausführungsvariante ist eine Schnellmontagemutter als Steckschienenmutter ausgebildet, indem eine Deckschale über zwei Stege der Schnellmontagemutter fest mit der Druckplatte verbindbar ist.

Vorteilhaft sind die Stege jeweils über ein Filmscharnier an der Deckschale angebracht, welche die Schnellmontagemutter auf einem definierten Abstand zur Druckplatte halten und ursprünglich bei der Herstellung und zur leichteren Vormontage aufgeklappt waren.

Vorteilhaft schwenken die Stege jeweils einen angeformten Niederhalter axial über die Grundschale der Schnellmontagemutter und drücken diese gegen den innerhalb der Schnellmontagemutter dazwischen integrierten, unter leichter axialer Vorspannung begrenzt axial biegbaren, Drahtbügel. Der entstandene, axial vorgespannte Spalt zwischen den beiden Schalen ermöglicht bei der Montage der Steckschienenmutter einen Ausgleich der Montagedicke der Installationsschiene mit einer üblichen Toleranz von ca. 0,4 mm.

Vorteilhaft weist die Schnellmontagemutter auf der in Richtung der Grundplatte orientierten Oberfläche eine Verzahnung auf. Somit ermöglicht der Drahtbügel zusätzlich ein vorgespanntes Eingreifen der Verzahnung der Schnellmontagemutter in die Gegenverzahnung der Installationsschiene. Der Drahtbügel kombiniert somit die oben ausgeführte Befestigungsfunktion an der Gewindestange mit der Montagefunktion an der Installationsschiene durch Aufbringen einer axialen Vorspannung.

Vorteilhaft ist die Grundform der Schnellmontagemutter mit eine Breite, welche geringfügig kleiner als die Öffnung der C-förmigen Installationsschiene ist, wodurch die Schnellmontagemutter durch die Öffnung in die Installationsschiene eingeführt werden kann, einer Länge, welche etwas kleiner als das Innenmass der Installationsschiene ist, wodurch die quer zur Schienenachse orientierte Schnellmontagemutter axial formschlüssig lagerbar und längs der Installationsschiene frei beweglich ist, und zwei diagonal gegenüberliegenden axialen Kanten, welche entsprechend des in die Installationsschiene einschreibbaren Kreises mit dem Durchmesser Y' abgerundet sind, wodurch die längs der Schienenachse eingeführte Schnellmontagemutter nur rechtsdrehend in die Installationsschiene eingedreht werden kann, im wesentlichen prismatisch ausgebildet.

Vorteilhaft wird ein alternatives Befestigungssystem zur Montage an Installationsschienen mit zwei Schnellmontagemuttern ausgebildet, wobei eine erste als Schienenmutter ausgebildete Schnellmontagemutter fest mit der Grundplatte verbunden in eine C-förmige Installationsschiene einführbar ist. Eine, über den in beide Schnellmontagemuttern koaxial eingeführten Gewindestab verbundene, zweite als Kontermutter ausgeführte drehschraubbare Schnellmontagemutter ist auf den zugewandten ebenen Teilflächen der Grundplatte haftreibend fixierbar und über Entarretierungsmittel wieder lösbar.

Vorteilhafterweise weisen die beiden Schenkel des Drahtbügels jeweils eine Neigung auf, die derjenigen des Gewindebolzens entspricht, um eine formschlüssige Verbindung zwischen der Aussenkontur des Gewindebolzens und dem Drahtbügel sicherzustellen.

Die Erfindung wird bezüglich eines vorteilhaften Ausführungsbeispiels näher erläutert mit:
Fig. 1 als Schnellmontagemutter
Fig. 1a ein Querschnitt der in Fig. 1 dargestellten Schnellmontagemutter
Fig. 2 als Schnellmontagemutter mit Schalen
Fig. 3 als Befestigungssystem zur Montage an Installationsschienen mit einer Schnellmontagemutter
Fig. 4 als Kontermutter mit einem Schaltelement
Fig. 5. als Kontermutter mit einem Kragarm
Fig. 6 als Steckschienenmutter
Fig. 7 als Befestigungssystem zur Montage an Installationsschienen mit zwei Schnellmontagemuttern

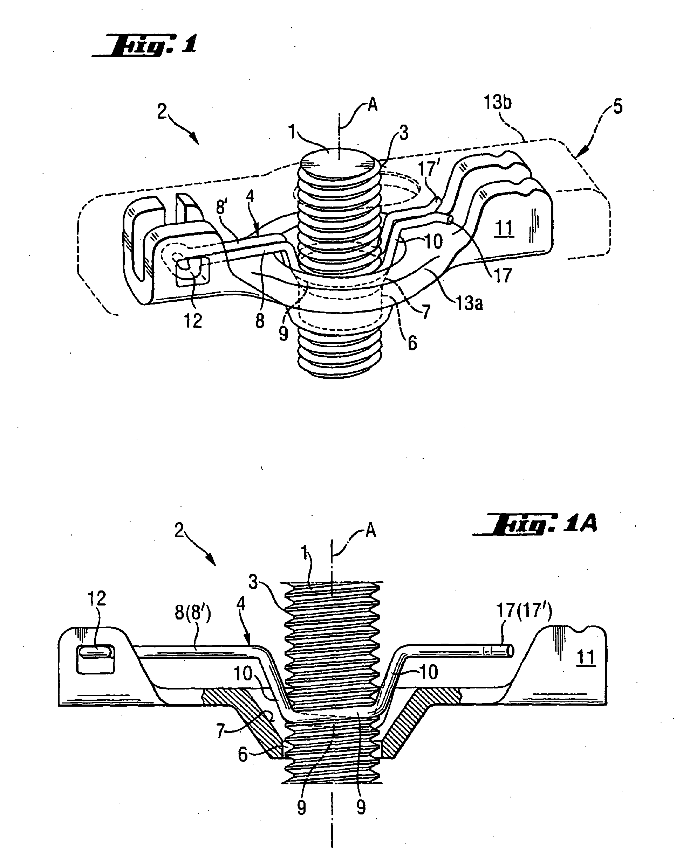

Nach Fig. 1 und 1a besteht eine, einen Gewindebolzen 1 mit der Achse A im Innern aufnehmende, Schnellmontagemutter 2, aus einem als Drahtfeder aus rostfreiem Edelstahl ausgeführten, teilweise in einen Gewindegang 3 eingreifenden, federnden Drahtbügel 4 innerhalb eines nur teilweise dargestellten Muttergehäuses 5 mit einer durchgehenden koaxialen Öffnung 6, in dieser einen sich von der axialen Ruhelage des Drahtbügels 4 radial verjüngenden Innenkonus 7, innerhalb dessen der begrenzt axial bewegliche Drahtbügel 4 teilweise angelegt ist. Der Drahtbügel 4 ist zweischenklig mit relativ zueinander federnden Schenkeln 8, 8' ausgeführt, dessen nahezu parallele Schenkel 8, 8' innerhalb der Radialebene jeweils mit einem kreisbogenförmig geformten Mittelteil 9 , welches über eine Kröpfung 10 axial versetzt ist, längs in die Gewindegänge 3 des Gewindebolzens 1 eingreifen und an dem Innenkonus 7 anliegen. Der in den kreisbogenförmig geformten spannungsfreien Mittelteil 9 einschreibbare Innenkreisdurchmesser entspricht etwa dem Aussendurchmesser des Gewindebolzen 1. Der Drahtbügel 4 ist innerhalb des Muttergehäuses 5, die mit Griffflächen 11 eine Flügelmutter ausbildet, über eine gekröpfte Lagerstelle 12 im Verbindungspunkt beider Schenkel 8, 8' axial begrenzt beweglich gelagert.

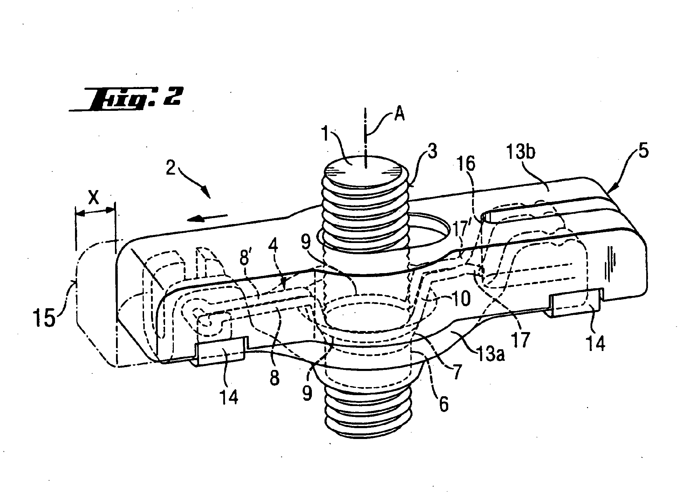

Nach Fig. 2 besteht das Muttergehäuse 5 aus zwei, längs des Drahtbügels 4 entlang x begrenzt relativ zueinander beweglich geführten Schalen 13a, 13b, welche über schnappartig einrastende Einrastmittel 14 formschlüssig verdrehfest miteinander verbunden sind, die eine Führung zwischen zwei Positionen 15 längs des innerhalb eingebetteten Drahtbügels 4 ausbilden. Die blechern ausgeführte Deckschale 13a bildet einen radial nach innen gerichteten Keil 16 aus, welcher zwischen keilförmig gekröpften freien Enden 17, 17' der Schenkel 8, 8' des Drahtbügels 4 angeordnet ist.

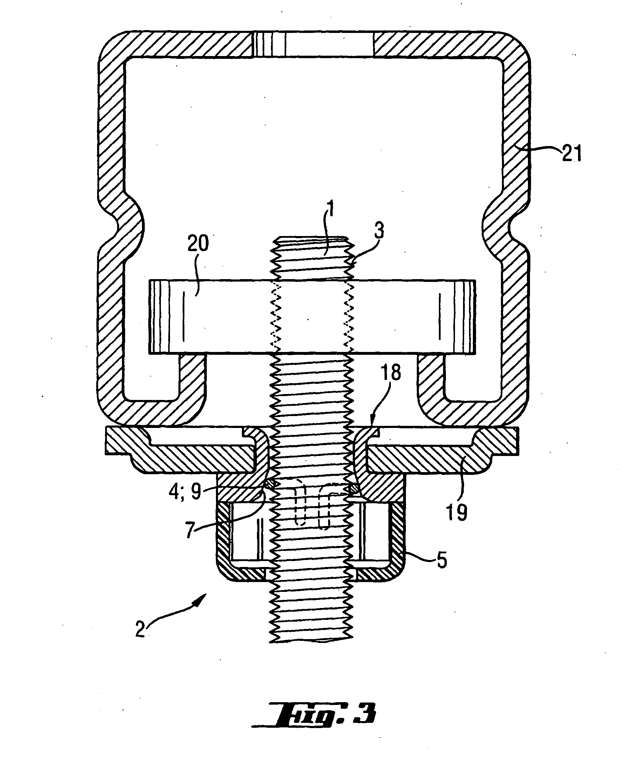

Nach Fig. 3 ist bei einem Befestigungssystem auf der den Innenkonus 7 ausbildenden Seite des Muttergehäuses 5 eine Befestigungshülse 18 koaxial angeformt, über welche die Schnellmontagemutter 1 mit einer Druckplatte 19 über eine Hohlnietverbindung koaxial drehbar verbunden ist. Die Schnellmontagemutter 2 mit der Druckplatte 19 ist über den als Gewindestange ausgeführten Gewindebolzen 1 mit einer speziellen, drehfest gelagerten Schienenmutter 20 verbunden und montiert somit die Gewindestange 1 fest an einer teilweise dazwischen angeordneten Installationsschiene 21.

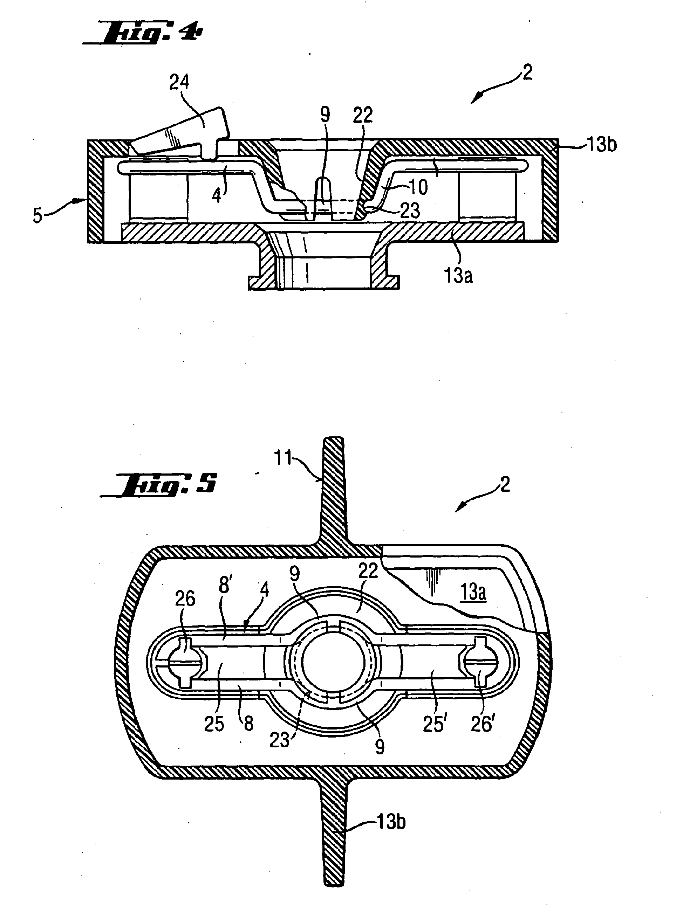

Nach Fig. 4 weist für die als Kontermutter ausgeführte Schnellmontagemutter 2 die aus Kunststoff ausgeführte Deckschale 13b innerhalb eine radial aufweitbare koaxiale Aussenkonushülse 22 mit einem Winkel von 15° bis 20° und einer radial äusseren umlaufenden Ringnut 23 für den Mittelteil 9 des Drahtbügels 4 auf, in welcher dieser spannungsfrei axial fixierbar ist. Die Aussenkonushülse 22 ist axial geschlitzt. Die Deckschale 13b weist im radial äusseren Bereich als Entarretierelement ein Schaltelement 24 auf, welcher in einem axialen Kontakt zum Drahtbügel 4 steht, der innerhalb des Muttergehäuses 5 versetzt axial einseitig unterstützt sowie in der Ringnut 23 axial fixiert ist.

Nach Fig. 5 weist für die alternativ als Kontermutter ausgeführte Schnellmontagemutter 2 die aus Kunststoff ausgeführte Deckschale 13b mit der radial aufweitbaren koaxialen Aussenkonushülse 22 als Entarretierelement zwei gegenständig radial auskragende axial federnde Kragarme 25, 25' auf, welche im radial äusseren Bereich jeweils einen zum Drahtbügel 4 orientierten axialen Lagerbolzen 26, 26' für den Drahtbügel 4 aufweisen, welche ihrerseits spreizend federnde Rastnasen ausbilden, die in die radial äusseren Bereiche des Drahtbügels 4 innerhalb der Schenkel 8, 8' axial fixierend einrasten. Die Deckschale 13b bildet die Griffflächen 11 für die Ausbildung als Flügelmutter senkrecht zu den längs des Drahtbügels 4 orientierten Kragarmen 25, 25' aus.

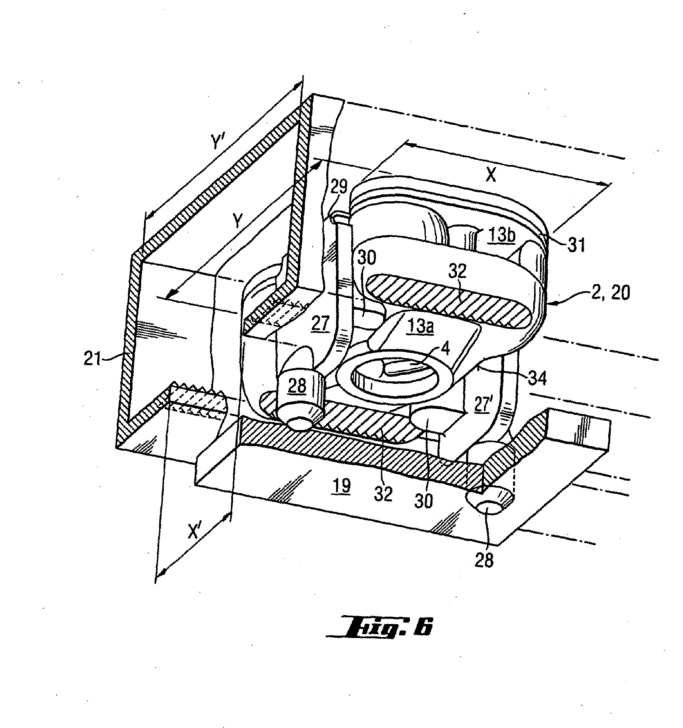

Nach Fig. 6 ist eine Schnellmontagemutter 2 als Steckschienenmutter 20 ausgeführt. Eine Deckschale 13b der Schnellmontagemutter 2 ist fest mit der Druckplatte 19 verbunden. Dazu sind zwei Stege 27, 27' mit endseitigen Montagebolzen 28 jeweils über ein Filmscharnier 29 an der Deckschale 13b angebracht, welche die Schnellmontagemutter 2 auf einem definierten Abstand zur Druckplatte 19 fixiert. Die um 90° hochgeklappten Stege 27, 27' verlaufen axial frei beweglich in zugeordneten radialen Aussparungen 34 im Bereich der Stege 27, 27' der zugeordneten anderen Grundschale 13a. Die Stege 27, 27' schwenken jeweils einen angeformten Niederhalter 30 axial über die Grundschale 13a der Schnellmontagemutter 2 mit integriertem Drahtbügel 4. Zwischen der Grundschale 13a und der Deckschale 13b der Schnellmontagemutter 2 wird ein Spalt 31 von ca. 1 mm ausgebildet. Die in Richtung der Grundplatte 19 orientierte Oberfläche der Schnellmontagemutter 2 weist teilweise eine Verzahnung 32 auf. Die prismatisch ausgebildete Grundform der Schnellmontagemutter 2 hat eine Breite X, welche geringfügig kleiner als die Öffnung X' der C-förmigen Installationsschiene 21 ist. Die Länge Y ist etwas kleiner als das Innenmass Y' der Installationsschiene 21. Zwei diagonal gegenüberliegende axiale Kanten der Schnellmontagemutter 2 sind entsprechend des in die Installationsschiene einschreibbaren Kreises mit dem Durchmesser Y' abgerundet.

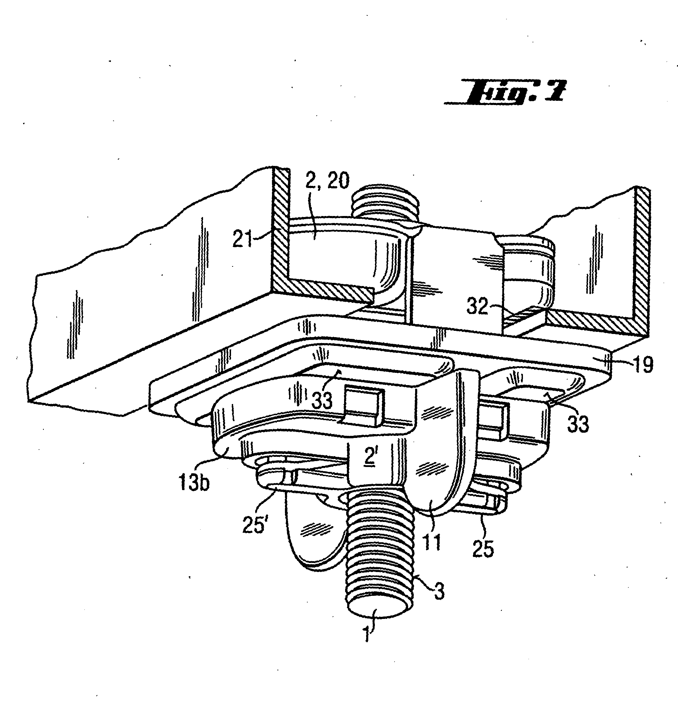

Nach Fig. 7 weist ein alternatives Befestigungssystem zur Montage an Installationsschienen 21 eine erste als drehfeste Schienenmutter 20 ausgebildete Schnellmontagemutter 2 auf, welche fest mit der Grundplatte 19 verbunden in eine C-förmige Installationsschiene 21 eingeführt ist. Eine zweite als Kontermutter ausgeführte drehschraubbare Schnellmontagemutter 2' ist , über den durch beide Schnellmontagemuttern 2, 2' koaxial hindurchgeführten Gewindestab 1 verbunden, auf den zugewandten ebenen Teilflächen 33 der Grundplatte 19 im flächigen Kontakt angeordnet.

## Patentansprüche

1. Schnellmontagemutter, welche zumindest teilweise drehbewegungsfrei axial zu einem Gewindebolzen (1) beweglich ist, mit einem, teilweise in zumindest einen Gewindegang (3) eingreifenden, federnden Drahtbügel (4) innerhalb eines Muttergehäuses (5) mit einer durchgehenden koaxialen Öffnung (6), **dadurch gekennzeichnet, dass** der Drahtbügel (4) zweischenklig mit relativ zueinander federnden Schenkeln (8, 8') ausgeführt ist und dass die Öffnung (6) zumindest einen sich von der axialen Ruhelage des Drahtbügels (4) radial verjüngenden Innenkonus (7) aufweist, innerhalb dessen der begrenzt axial bewegliche Drahtbügel (4) zumindest teilweise anlegbar ist.

2. Schnellmontagemutter nach Anspruch 1, **dadurch gekennzeichnet, dass** die Schenkel (8, 8') innerhalb der Radialebene jeweils einen kreisbogenförmig geformten Mittelteil (9) ausbilden, welcher teilweise längs der Gewindegänge (3) des Gewindebolzens (1) eingreifbar ist.

3. Schnellmontagemutter nach Anspruch 2, **dadurch gekennzeichnet, dass** der kreisbogenförmig geformte Mittelteil (9) über eine Kröpfung (10) axial versetzt ist.

4. Schnellmontagemutter nach einem der vorherigen Ansprüche, **dadurch gekennzeichnet, dass** der Drahtbügel (4) über eine Lagerstelle (12) innerhalb des Muttergehäuses (5) axial begrenzt beweglich gelagert ist.

5. Schnellmontagemutter nach einem der vorherigen Ansprüche, **dadurch gekennzeichnet, dass** das Muttergehäuse (5) eine Handmutter und optional eine Flügelmutter ausbildet.

6. Schnellmontagemutter nach einem der vorherigen Ansprüche, **dadurch gekennzeichnet, dass** das Muttergehäuse (5) aus mindestens zwei, miteinander über Einrastmittel (14) formschlüssig verdrehfest verbindbaren Schalen (13a, 13b) besteht, welche optional eine Führung der Deckschale (13b) längs des innerhalb des Muttergehäuses (5) einbettbaren Drahtbügels (4) ausbilden.

7. Schnellmontagemutter nach Anspruch 6, **dadurch gekennzeichnet, dass** die Deckschale (13b) einen radial nach innen gerichteten Keil (16) ausbildet, welcher zwischen die freien Enden (17, 17') der Schenkel (8, 8') des Drahtbügels (4) einführbar ist.

8. Schnellmontagemutter nach einem der vorherigen Ansprüche, **dadurch gekennzeichnet, dass** auf der den Innenkonus (7) ausbildenden Aussenseite des Muttergehäuses (5) eine Befestigungshülse (18) koaxial angeformt ist.

9. Schnellmontagemutter nach Anspruch 8, **dadurch gekennzeichnet, dass** über die Befestigungshülse (18) eine Druckplatte (19) oder eine Schienenmutter (20) koaxial drehbar verbindbar ist.

10. Schnellmontagemutter nach einem der Ansprüche 2 bis 9, **dadurch gekennzeichnet, dass** die Deckschale (13b) innerhalb eine radial aufweitbare koaxiale Aussenkonushülse (22) mit einer radial äusseren umlaufenden Ringnut (23) für den Mittelteil (9) des Drahtbügels (4) aufweist, in welcher dieser spannungsfrei axial fixierbar ist.

11. Schnellmontagemutter nach Anspruch 10, **dadurch gekennzeichnet, dass** die Deckschale (13b) im radial äusseren Bereich als Betätigungsmittel zur Arretierung ein Schaltelement (24) aufweist, welches mit dem innerhalb des Muttergehäuses (5) versetzt axial einseitig unterstützten sowie in der Ringnut (23) axial fixierten Drahtbügel 4 axial kontaktierbar ist:

12. Schnellmontagemutter nach Anspruch 10, **dadurch gekennzeichnet, dass** die Deckschale als Betätigungsmittel zur Arretierung zumindest einen radial auskragenden axial federnden Kragarm (25) aufweist, welcher im radial äusseren Bereich einen zum Drahtbügel (4) orientierten axialen Lagerbolzen (26) für den Drahtbügel (4) aufweist.

13. Schnellmontagemutter nach Anspruch 12, **dadurch gekennzeichnet, dass** längs des Drahtbügels (4) zwei gegenständig angeordnete Kragarme (25, 25') vorhanden sind.

14. Schnellmontagemutter nach Anspruch 12 oder Anspruch 13, **dadurch gekennzeichnet, dass** die Deckschale (13b) zumindest eine senkrecht zu dem Kragarm (25) orientierte Grifffläche (11) ausbildet

15. Schnellmontagemutter nach einem der Ansprüche 6 bis 8, **dadurch gekennzeichnet, dass** die Deckschale (13b) über zwei Stege (27, 27') fest mit der Druckplatte (19) verbindbar ist und dass optional die Stege (27, 27') jeweils endseitig einen Montagebolzen (28) aufweisen.

16. Schnellmontagemutter nach Anspruch 15, **dadurch gekennzeichnet, dass** die über ein Filmscharnier (28) mit der Deckschale (13b) verbundenen Stege (27 27') über die Grundschale (13a) schwenkbar sind.

17. Schnellmontagemutter nach Anspruch 15 oder Anspruch 16, **dadurch gekennzeichnet, dass** zumindest ein an einem Steg (27) angeformter Niederhalter (30) axial gegen die Grundschale (13a) drückt, welche den unter leichter axialer Vorspannung begrenzt axial biegbaren, Drahtbügel (4) beinhaltet.

18. Schnellmontagemutter nach Anspruch 17, **dadurch gekennzeichnet, dass** zwischen der Grundschale (13a) und der axial vorgespannten Deckschale (13b) ein axialer Spalt (31) ausbildbar ist.

19. Schnellmontagemutter nach einem der Anspruche 15 bis 18, **dadurch gekennzeichnet, dass** die in Richtung der Grundplatte (19) orientierte Oberfläche eine Verzahnung (32) aufweist.

20. Schnellmontagemutter nach einem der Ansprüche 15 bis 19, **dadurch gekennzeichnet, dass** die Grundform des Muttergehäuses (5) prismatisch ausgebildet ist, mit einer Breite (X), welche geringfügig kleiner als die Öffnung (X') der C-förmigen Installationsschiene (21) ist, einer Länge (Y), welche etwas kleiner als das Innenmass (Y') der Installationsschiene (21) ist und zwei diagonal gegenüberliegenden axialen Kanten, welche entsprechend des in die Installationsschiene (21) einschreibbaren Kreises mit dem Durchmesser (Y') abgerundet sind.

21. Schnellmontagemutter nach einem der Ansprüche 15 bis 20, **dadurch gekennzeichnet, dass** eine erste als drehfeste Schienenmutter (20) ausgebildete Schnellmentagemutter (2) fest mit der Grundplatte (19) verbunden in eine C-förmige Installationsschiene (21) einführbar ist und eine, über den koaxial eingeführen Gewindestab (1) verbundene, zweite drehschraubbare Schnellmontagemutter (2) auf den zugewandten ebenen Teilflächen der Grundplatte (19) haftreibend fixierbar ist.

## Claims

1. Quick-mounting nut which is movable axially, in an at least partially non-rotating manner, with respect to a threaded pin (1), comprising a resilient wire clip (4) engaging partially in at least one thread turn (3) inside a nut housing (5) which has a coaxial through-opening (6), **characterised in that** the wire clip (4) is configured with two arms (8, 8') which are resiliently movable with respect to one another, and **in that** the opening (6) has at least one inner cone (7) tapering radially inwards from the axial rest position of the wire clip (4), against the inner face of which inner cone (7) the wire clip (4), which has limited axial movability, can be moved at least partially into abutment.

2. Quick-mounting nut according to Claim 1, **characterised in that** the arms (8, 8') each have within the radial plane an arcuate middle portion (9) which is able partially to engage along the thread turns (3) of the threaded pin (1).

3. Quick-mounting nut according to Claim 2, **characterised in that** the arcuate middle portion (9) is offset axially by means of a cranked section (10).

4. Quick-mounting nut according to any one of the preceding claims, **characterised in that** the wire clip (4) is mounted with limited axial movability inside the nut housing (5) by means of a mounting point (12).

5. Quick-mounting nut according to any one of the preceding claims, **characterised in that** the nut housing (5) is in the form of a hand nut and optionally a wingnut.

6. Quick-mounting nut according to any one of the preceding claims, **characterised in that** the nut housing (5) consists of at least two shells (13a, 13b) which are connectable to one another in a form-fitting, non-rotatable manner by means of latching means (14) which optionally form a guide of the covering shell (13b) along the wire clip (4) which can be contained inside the nut housing (5).

7. Quick-mounting nut according to Claim 6, **characterised in that** the covering shell (13b) includes a radially inwardly-oriented wedge (16) which can be inserted between the free ends (17, 17') of the arms (8, 8') of the wire clip (4).

8. Quick-mounting nut according to any one of the preceding claims, **characterised in that** a fastening socket (18) is formed coaxially on the outer side of the nut housing (5) which forms the inner cone (7).

9. Quick-fastening nut according to Claim 8, **characterised in that** a pressure plate (19) or a rail nut (20) is connectable in a coaxially rotatable manner by means of the fastening socket (18).

10. Quick-mounting nut according to any one of Claims 2 to 9, **characterised in that** the covering shell (13b) has on the inside thereof a radially expandable coaxial outer cone sleeve (22) with radially on the outside thereof a peripheral annular groove (23) for the middle portion (9) of the wire clip (4), in which groove (23) the wire clip (4) can be axially fixed without tension.

11. Quick-mounting nut according to Claim 10, **characterised in that** the covering shell (13b) has in its radially outer region a switching element (24) as an actuating means for locking, which switching element (24) can be moved axially into contact with the wire clip (4) which is supported axially on one side in an offset manner inside the nut housing (5) and is fixed axially in the annular groove (23).

12. Quick-mounting nut according to Claim 10, **characterised in that** the covering shell has at least one radially protruding, axially resilient cantilever arm (25) which has in its radially outer region an axial mounting pin (26) for the wire clip (4) oriented towards the wire clip (4).

13. Quick-mounting nut according to Claim 12, **characterised in that** two oppositely-arranged cantilever arms (25, 25') are present along the wire clip (4).

14. Quick-mounting nut according to Claim 12 or Claim 13, **characterised in that** the covering shell (13b) forms at least one gripping surface (11) oriented perpendicularly to the cantilever arm (25).

15. Quick-mounting nut according to any one of Claims 6 to 8, **characterised in that** the covering shell (13b) can be firmly connected to the pressure plate (19) by means of two tabs (27, 27') and **in that** the tabs (27, 27') optionally each have an assembly pin (28) at their end.

16. Quick-mounting nut according to Claim 15, **characterised in that** the tabs (27, 27'), which are connected to the covering shell (13b) via an integral hinge (28), are swivellable over the base shell (13a).

17. Quick-mounting nut according to Claim 15 or Claim 16, **characterised in that** at least one retaining element (30) moulded integrally on a tab (27) presses axially against the base shell (13a) containing the wire clip (4), which has limited axial flexibility with a light axial pretension.

18. Quick-mounting nut according to Claim 17, **characterised in that** an axial gap (31) can be formed between the base shell (13a) and the axially pretensioned covering shell (13b).

19. Quick-mounting nut according to any one of Claims 15 to 18, **characterised in that** the surface oriented in the direction of the base plate (19) has a toothing (32).

20. Quick-mounting nut according to any one of Claims 15 to 19, **characterised in that** the basic shape of the nut housing (5) has a prismatic configuration with a width (X) which is slightly smaller than the opening (X') of the C-shaped installation rail (21), a length (Y) which is somewhat smaller than the internal dimensional (Y') of the installation rail (21) and two diagonally-opposed axial edges which are rounded in conformity to the circle with the diameter (Y') which can be inscribed in the installation rail (21).

21. Quick-mounting nut according to any one of Claims 15 to 20, **characterised in that** a first quick-mounting nut (2) in the form of a non-rotatable rail nut (20) connected rigidly to the base plate (19) is insertable in a C-shaped installation rail (21), and a second quick-mounting nut (2), which can be screwed by rotation and is connected by means of the coaxially inserted threaded rod (1), can be fixed by static friction on the flat partial surfaces of the base plate (19) oriented towards said second quick-mounting nut (2).

## Revendications

1. Ecrou de montage rapide, qui est mobile au moins partiellement sans déplacement rotatif de manière axiale par rapport à une tige filetée (1), comprenant une attache (4) élastique en fil métallique, s'engageant partiellement dans au moins un filetage (3) à l'intérieur d'un boîtier d'écrou (5) comprenant une ouverture (6) coaxiale traversante, **caractérisé en ce que** l'attache (4) en fil métallique est réalisée de manière bifide avec des branches (8, 8') élastiques l'une par rapport à l'autre et l'ouverture (6) présente au moins un cône interne (7), convergeant radialement depuis la position de repos axiale de l'attache (4) en fil métallique, à l'intérieur duquel l'attache (4) en fil métallique mobile de manière axialement limitée peut être au moins partiellement installée.

2. Ecrou de montage rapide selon la revendication 1, **caractérisé en ce que** les branches (8, 8') forment à l'intérieur du plan radial respectivement une partie intermédiaire (9) formée en arc de cercle, qui peut être engagée partiellement le long des filetages (3) de la tige filetée (1).

3. Écrou de montage rapide selon la revendication 2, **caractérisé en ce que** la partie intermédiaire (9) formée en arc de cercle est décalée de manière axiale par l'intermédiaire d'un coude (10).

4. Écrou de montage rapide selon l'une quelconque des revendications précédentes, **caractérisé en ce que** l'attache (4) en fil métallique est montée de manière mobile axialement limitée dans un logement (12) à l'intérieur du boîtier d'écrou (5).

5. Écrou de montage rapide selon l'une quelconque des revendications précédentes, **caractérisé en ce que** le boîtier d'écrou (5) forme un écrou manuel et de manière optionnelle un écrou à ailettes.

6. Écrou de montage rapide selon l'une quelconque des relations précédentes, **caractérisé en ce que** le boîtier d'écrou (5) est constitué d'au moins deux coques (13a, 13b) pouvant être reliées de manière fixe en rotation par assemblage de forme l'une avec l'autre par l'intermédiaire d'un moyen d'encliquetage (14), qui forme de manière optionnelle un guidage de la coque supérieure (13b) le long de l'attache (4) en fil métallique pouvant être bloquée à l'intérieur du boîtier d'écrou (5).

7. Ecrou de montage rapide selon la revendication 6, **caractérisé en ce que** la coque supérieure (13b) forme un coin (16) dirigé radialement vers l'intérieur, qui peut être introduit entre les extrémités libres (17, 17') des branches (8, 8') de l'attache (4) en fil métallique.

8. Ecrou de montage rapide selon l'une quelconque des revendications précédentes, **caractérisé en ce qu'**une bague de fixation (18) s'ajuste coaxialement au côté extérieur, formant le cône intérieur (7), du boîtier d'écrou (5).

9. Ecrou de montage rapide selon la revendication 8, **caractérisé en ce qu'**une plaque d'appui (19) ou un écrou rail (20) peut être relié(e) de manière coaxialement rotative par l'intermédiaire de la bague de fixation (18).

10. Ecrou de montage rapide selon l'une quelconque des revendications 2 à 9, **caractérisé en ce que** la coque supérieure (13b) présente à l'intérieur une bague (22) de cône externe, coaxiale, pouvant être radialement élargie, comportant une rainure annulaire (23) circulaire radialement extérieure pour la pièce intermédiaire (9) de l'attache (4) en fil métallique, dans laquelle celle-ci peut être fixée axialement sans tension.

11. Écrou de montage rapide selon la revendication 10, **caractérisé en ce que** la coque supérieure (13b) présente, dans un secteur radialement extérieur et en tant que moyen d'actionnement pour un blocage, un élément de commutation (24) qui peut être connecté de manière axiale avec l'attache (4) en fil métallique soutenue unilatéralement de manière décalée axialement à l'intérieur du boîtier d'écrou (5) et fixée de manière axiale dans la rainure annulaire (23).

12. Ecrou de montage rapide selon la revendication 10, **caractérisé en ce que** la coque supérieure présente, en tant que moyen d'actionnement pour un blocage, au moins un bras en porte-à-faux (25) axialement élastique et radialement saillant, qui présente dans un secteur radialement extérieur un boulon de palier (26) axial de l'attache (4) en fil métallique, orienté par rapport à l'attache (4) en fil métallique.

13. Ecrou de montage rapide selon la revendication 12, **caractérisé en ce que** deux bras saillants (25, 25') agencés de manière opposée sont présents le long de l'attache (4) en fil métallique.

14. Ecrou de montage rapide selon la revendication 12 ou la revendication 13, **caractérisé en ce que** la coque supérieure (13b) forme au moins une surface de préhension (11) orientée perpendiculairement par rapport au bras saillant.

15. Ecrou de montage rapide selon l'une quelconque des revendications 6 à 18, **caractérisé en ce que** la coque supérieure (13b) peut être reliée de manière fixe avec la plaque d'appui (19) par l'intermédiaire de deux étais (27, 27') et les étais (27, 27') présentent de manière optionnelle respectivement un boulon de montage (28) côté extrémité.

16. Ecrou de montage rapide selon la revendication 15, **caractérisé en ce que** les étais (27, 27') reliés avec la coque supérieure (13b) par l'intermédiaire d'un film formant charnière (28) peuvent être orientés par l'intermédiaire de la coque d'appui (13).

17. Ecrou de montage rapide selon la revendication 15 ou 16, **caractérisé en ce qu'**au moins un serre-flan (30) ajusté au niveau d'un étai (27) presse de manière axiale contre la coque d'appui (13a), qui contient l'attache (4) en fil métallique pouvant être pliée de manière axiale limitée par une légère précontrainte axiale.

18. Ecrou de montage rapide selon la revendication 17, **caractérisé en ce qu'**un interstice axial (31) peut être formé entre la coque d'appui (13a) et la coque supérieure (13b) axialement précontrainte.

19. Ecrou de montage rapide selon l'une quelconque des revendications 15 à 18, **caractérisé en ce que** la surface orientée en direction de la plaque d'appui (19) présente une denture (32).

20. Ecrou de montage rapide selon l'une quelconque des revendications 15 à 19, **caractérisé en ce que** la forme d'appui du boîtier d'écrou (5) est formée de manière prismatique, avec une largeur (X), qui est quelque peu inférieure à l'ouverture (X') des rails d'installation (21) en forme de C, une longueur (Y), qui est un peu inférieure à la dimension intérieure (Y') des rails d'installation (21) et deux arêtes axiales diagonalement opposées, qui sont arrondies d'une manière qui correspond au cercle de diamètre (Y') pouvant être inscrit dans les rails d'installation (21).

21. Ecrou de montage rapide selon l'une quelconque des revendications 15 à 20, **caractérisé en ce qu'**un premier écrou de montage rapide (2) formé en tant qu'écrou rail (20) bloqué en rotation peut être introduit dans un rail d'installation (21) en forme de C de manière reliée fixe avec la plaque d'appui (19) et un second écrou de montage rapide (2) vissable, relié par l'intermédiaire de la tige filetée (1) introduite de manière coaxiale, peut être fixé par frottement statique sur les surfaces partielles planes orientées de la plaque d'appui (19).
